# FASCICULE DE BREVET EUROPEEN

(11) **EP 2 927 992 B1**
(45) Date de publication et mention de la délivrance du brevet: **20.09.2017**
(21) Numéro de dépôt: 15161982.2
(22) Date de dépôt: 31.03.2015
(51) Int. Cl.: H01M 2/10, F42B 19/24, H01M 10/04, H01M 2/34

(54) **SYSTEME MECANIQUE DE MAINTIEN POUR MAINTENIR UNE BATTERIE DANS UN COMPARTIMENT EN FORME DE TUBE**
MECHANISCHES HALTERUNGSSYSTEM ZUM FIXIEREN EINER BATTERIE IN EINEM RÖHRENFÖRMIGEN FACH
MECHANICAL HOLDING SYSTEM FOR HOLDING A BATTERY IN A TUBE-SHAPED COMPARTMENT

(30) Priorité: 31.03.2014 FR 1452814
(43) Date de publication de la demande: 07.10.2015
(73) Titulaire: Saft Groupe S.A., 93170 Bagnolet (FR)
(72) Inventeur: Susset, Pascal, 86340 Nieuil l'Espoir (FR); Guler, Mikael, 86000 Poitiers (FR)
(74) Mandataire: Hirsch & Associés

(56) Documents cités:
- WO-A1-2013/106049
- JP-A- H11 208 287
- US-A1- 2011 223 459

## Description

### DOMAINE DE L'INVENTION

La présente invention concerne le domaine des systèmes mécaniques de maintien d'une batterie de format cylindrique dans un compartiment en forme de tube. En particulier, le système mécanique de maintien de l'invention est conçu pour maintenir une batterie dans un compartiment d'un engin destiné à être alimenté par la batterie, ledit compartiment formant le tube. L'engin peut être par exemple un engin automoteur.

### ETAT DE LA TECHNIQUE

Lorsque l'engin est destiné à être mis en mouvement, la batterie peut subir des sollicitations mécaniques extérieures au cours du mouvement telles que des vibrations, des chocs, des pressions extérieures pouvant entraîner un rétrécissement du compartiment risquant d'endommager la batterie.

Une solution à ces problèmes consiste à réaliser une batterie dite "résinée" par injection de résine entre le compartiment et la batterie après la mise en place de celle-ci dans le compartiment. Ce type de batterie est également appelé batterie rigide car elle est considérée comme indéformables. Elle est insérée dans le compartiment prévu à cet effet, appelé par la suite « tronçon énergie », et fixées en plusieurs points. Ainsi, une batterie rigide ne participe pas aux efforts de pressions externes que peut subir le compartiment de l'engin. Néanmoins, un inconvénient de ce type de batterie est sa masse importante.

Il est également connu d'utiliser des systèmes mécaniques de maintien d'une batterie cylindrique dans un compartiment en forme de tube en utilisant le principe du cric à vis. Ce type de système mécanique de maintien comprend une base, un levier et une longue tige filetée adaptée pour être mise en rotation par une manivelle. La base est fixée à la batterie et le levier est en contact avec la paroi interne du tube. Sous l'action de la manivelle, la longue tige filetée tourne et permet ainsi de rapprocher ou d'éloigner les deux paires de bras de la triangulation formant le levier et d'augmenter ainsi la force appliquée entre la batterie et le tube autorisant ainsi un maintien de la batterie dans le tube.

Néanmoins, les systèmes de maintien conventionnels sont trop encombrants, trop lourds, et ne permettent pas un maintien homogène des batteries cylindriques. En effet, le serrage de la batterie cylindrique n'est pas homogène et mène à des amplifications et des déformations importantes de la batterie lorsque le tube ou tronçon est soumis à des sollicitations mécaniques. A cause de cette hétérogénéité du serrage, il est de plus impossible de quantifier les efforts exercés sur la batterie.

Le but de l'invention est de proposer un système mécanique de maintien pour maintenir une batterie de format cylindrique dans un tube de même axe longitudinal, qui permette un maintien homogène de la batterie dans le tube.

Notamment, il existe un besoin pour un système mécanique de maintien, simple à manoeuvrer, qui permette un serrage homogène de la batterie dans le tube et d'amortir uniformément les chocs et vibrations que pourrait subir la batterie, tout en limitant la masse et l'encombrement associés à ce système de maintien.

Les documents JP H11-208287 et US 2011/223459 décrivent des systèmes mécaniques de maintien comprenant :
- un amortisseur ;
- une came coopérant avec un suiveur de came ;
dans lequel :
- la rotation de la came provoque le déplacement du suiveur de came; et
- le déplacement du suiveur de came déplace l'amortisseur d'une position rétractée dans laquelle l'amortisseur est à distance d'une paroi à une position déployée dans laquelle l'amortisseur est en contact avec ladite paroi.

### RESUME DE L'INVENTION

A cet effet, l'invention a pour objet un système mécanique de maintien pour maintenir une batterie de format cylindrique dans un tube de même axe longitudinal, le système étant prévu pour être fixé à une paroi externe de la batterie, ledit système comprenant :
- un amortisseur ;
- une came coopérant avec un suiveur de came ;
dans lequel :
- la rotation de la came provoque le déplacement du suiveur de came ; et
- le déplacement du suiveur de came déplace l'amortisseur d'une position rétractée dans laquelle l'amortisseur est à distance de la paroi interne du tube à une position déployée dans laquelle l'amortisseur est en contact avec la paroi interne du tube
- le ou chaque chemin de came le long duquel le ou chaque suiveur de came est agencé pour se déplacer, comporte un méplat.

Un tel système mécanique de maintien selon l'invention permet de garantir un effort de serrage suffisamment important pour limiter les déplacements de la batterie au cours de sollicitations mécaniques. Il est suffisamment souple pour ne pas risquer d'endommager la batterie par compression.

De plus, ce système permet de simplifier l'installation de la batterie de façon reproductible dans le tube tout en garantissant un maintien homogène de la batterie dans le tube.

Selon différents modes de réalisations, le système mécanique de maintien peut comprendre en outre une ou plusieurs des caractéristiques suivantes selon toutes les combinaisons techniquement réalisables.

Selon un mode de réalisation, le système comprend:
- un support destiné à être fixé sur la paroi externe de la batterie;
- au moins un deuxième amortisseur, au moins une deuxième came coopérant avec un deuxième suiveur de came; et
- un dispositif d'actionnement supporté par le support et agencé pour provoquer la rotation de chaque came;
dans lequel :
- la rotation de la deuxième came provoque le déplacement du deuxième suiveur de came ;
- le déplacement du deuxième suiveur de came déplace le deuxième amortisseur d'une position rétractée dans laquelle le deuxième amortisseur est à distance de la paroi interne du tube à une position déployée dans laquelle le deuxième amortisseur est en contact avec la paroi interne du tube; et
- le déplacement des suiveurs de came sont synchrones.

Chaque amortisseur peut comprendre un patin élastique prévu pour être agencé en regard de la paroi interne du tube. Le patin élastique peut avoir une raideur non linéaire.

Le ou chaque patin élastique peut être en un matériau comportant un élastomère et de l'aluminium.

Le système peut comprendre une partie d'interfaçage de l'amortisseur avec la paroi interne du tube.

Le système mécanique peut comprendre un arbre d'axe parallèle à l'axe longitudinal de la batterie, l'arbre formant un dispositif d'actionnement de la ou chaque came.

Un rail formant guide pour le ou chaque amortisseur peut être prévu pour être fixé à la paroi interne du tube. Le rail peut comporter au moins une surface plane en regard du ou de chaque amortisseur.

Le rail peut présenter une section en forme de U de manière à ce que le ou chaque amortisseur soit en liaison glissière avec le rail.

Selon un autre aspect, la présente invention a également pour objet un dispositif mécanique de maintien pour maintenir une batterie de format cylindrique dans un tube de même axe longitudinal, le dispositif comprenant au moins trois systèmes mécaniques de maintien tels que décrits précédemment et prévus pour être répartis le long de la circonférence de la batterie.

Selon un mode de réalisation, le dispositif est conçu pour maintenir une batterie dans un compartiment d'un engin, l'engin étant destiné à être alimenté par la batterie, le compartiment étant constitué du tube. L'engin peut être automoteur, par exemple une torpille.

### DESCRIPTION DES FIGURES

D'autres caractéristiques et avantages de l'invention apparaîtront à la lecture de la description qui suit de modes de réalisation préférés de l'invention, donnés à titre d'exemple et en référence aux figures annexées, dans lesquelles :
- la figure 1 est une représentation schématique en perspective du dispositif mécanique de maintien selon l'invention destiné à maintenir une batterie de format cylindrique dans un tube de même axe longitudinal. Le dispositif mécanique comprend quatre systèmes mécaniques de maintien.
- la figure 2 illustre un premier mode de réalisation d'un système mécanique de maintien pour maintenir une batterie cylindrique dans un tube selon l'invention ;
- la figure 3 illustre le système mécanique de maintien de la figure 2 lorsque l'amortisseur du système est dans la position rétractée dans laquelle il est à distance de la paroi interne du tube,
- la figure 4 illustre le système mécanique de maintien de la figure 2 lorsque l'amortisseur est dans la position déployée dans laquelle il est en contact avec la paroi interne du tube; et
- la figure 5 illustre un deuxième mode de réalisation d'un système mécanique de maintien selon l'invention pour maintenir une batterie de format cylindrique. Le système de maintien comprend une pluralité de cames, chaque came étant associée à un amortisseur actionné par la came.

Sur les différentes figures, les éléments analogues sont désignés par des références identiques. En outre, les différents éléments ne sont pas nécessairement représentés à l'échelle afin de présenter une vue permettant de faciliter la compréhension de l'invention.

### DESCRIPTION DE MODES DE REALISATION

Dans la description qui suit, le terme "batterie" désigne un ou plusieurs éléments électrochimiques équipés des dispositifs nécessaires pour leur emploi, par exemple un boîtier, des bornes, un marquage et des dispositifs de protection contre la surcharge et/ou la surdécharge et/ou la surchauffe du ou des éléments électrochimiques.

Chaque élément électrochimique est défini comme une unité fonctionnelle de base, consistant en un assemblage d'électrodes, d'électrolyte, de conteneur, de bornes et généralement de séparateurs, qui est une source d'énergie électrique obtenue par transformation directe d'énergie chimique.

Le terme de format "cylindrique" utilisé dans la présente invention caractérise le format de la batterie et non le format des éléments électrochimiques qui en font partie. Les éléments électrochimiques peuvent néanmoins également être cylindriques mais ils ne le sont pas nécessairement. Ils peuvent par exemple être de format prismatique. Les éléments électrochimiques peuvent appartenir à tout type de technologie, par exemple lithium-ion, lithium primaire et Ag/Zn.

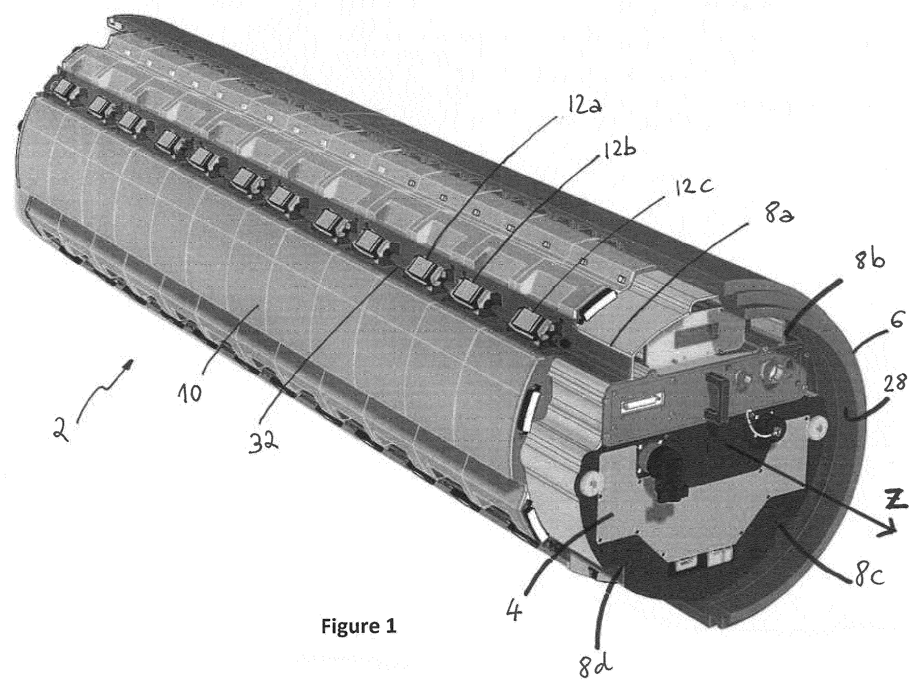

Enfin, le terme "cylindrique" n'est pas limité aux batteries dont la surface extérieure présente exactement la forme d'un cylindre. Ce terme inclut également le cas des batteries dont la forme extérieure globale s'apparente à un cylindre. Ces batteries peuvent présenter sur une portion de leur surface extérieure des parties saillantes et/ou des renfoncements comme illustré à la figure 1.

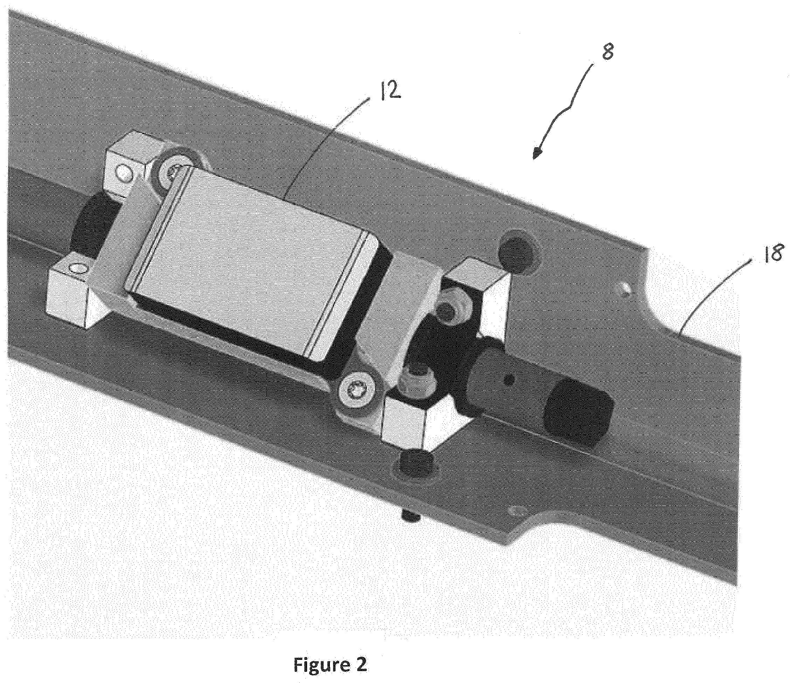

Un premier mode de réalisation du système mécanique de maintien selon l'invention va maintenant être détaillé en regard des figures 1 et 2.

La figure 1 montre que la batterie est logée dans un compartiment qui se présente sous la forme d'un tube 6 de diamètre interne légèrement supérieur au diamètre de la batterie. La batterie et le tube ont le même axe longitudinal Z. L'extrémité du tube située en avant de la figure 1 comprend des dispositifs électroniques 4 destinés à la gestion et à la protection de la batterie. Les éléments électrochimiques sont disposés en arrière de ces dispositifs électroniques, c'est-à-dire entre la portion du tube matérialisée par la pièce 12c et l'extrémité du tube située en arrière de la figure 1. Ces éléments peuvent être de format cylindrique, mas pas nécessairement. Ils peuvent être de format prismatique, de différentes largeurs, permettant ainsi de former un assemblage de format cylindrique par superposition des éléments.

La paroi externe 10 de la batterie comprend quatre renfoncements sur chacun desquels est fixé un système mécanique de maintien (8a, 8b, 8c et 8d). Chaque système de maintien fait face à la paroi interne 28 du tube. Seul le système mécanique 8a est représenté en détail.

Le dispositif mécanique de maintien 2 est constitué par l'ensemble des quatre systèmes mécaniques de maintien (8a, 8b, 8c et 8d) répartis régulièrement le long de la circonférence de la batterie cylindrique 4. Plus généralement, le dispositif mécanique de maintien comprend typiquement au moins trois systèmes mécaniques de maintien répartis le long de la circonférence de la batterie cylindrique.

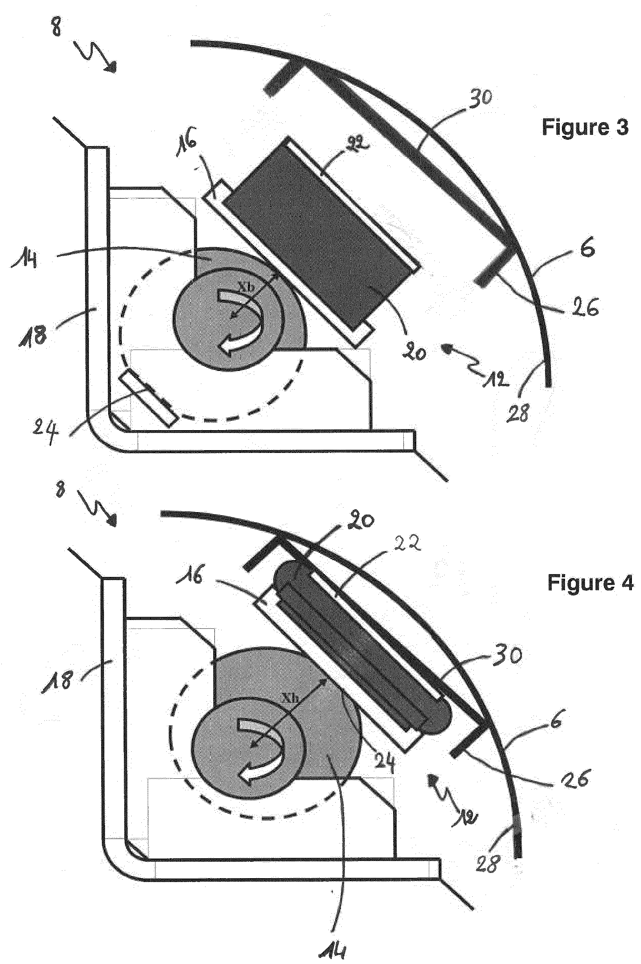

La figure 2 montre que chaque système de maintien comprend un rail 18 fixé sur une portion de la paroi externe de la batterie. Sur ce rail est fixée une came disposée sous un amortisseur 12 et actionnant cet amortisseur. La came n'est pas visible sur la figure 2 car masquée par l'amortisseur. La position de l'amortisseur dépend de la position de la came. Les deux positions de l'amortisseur sont illustrées aux figures 3 et 4.

La figure 3 montre que le système 8 comprend un amortisseur 12 et une came 14 coopérant avec un suiveur de came 16. Le système est agencé de manière à ce que la rotation de la came 14 provoque le déplacement du suiveur de came 16 et que le déplacement du suiveur de came 16 déplace l'amortisseur 12 d'une position rétractée dans laquelle l'amortisseur est à distance de la paroi interne 28 du tube 6 à une position déployée dans laquelle l'amortisseur est en contact avec la paroi interne du tube 6.

La figure 3 illustre le système mécanique de maintien 8 lorsque l'amortisseur est dans la position rétractée, dans laquelle l'amortisseur est à distance de la paroi interne du tube. Dans cette position, l'amortisseur est agencé de manière à ne pas être en compression entre le suiveur de came 16 et la paroi interne 28 du tube. Dans cette position, l'ensemble comprenant la batterie et le ou les systèmes de maintien est dimensionné de manière à ce qu'il puisse être introduit ou extrait du tube.

La figure 4 illustre le système mécanique de maintien 8 lorsque l'amortisseur est dans la position déployée, dans laquelle l'amortisseur est en contact avec la paroi interne du tube. Contrairement à la position rétractée, dans la position déployée, l'amortisseur est agencé de manière à être en compression entre le suiveur de came 16 et la paroi interne 28 du tube. Dans cette position, l'ensemble comprenant la batterie et le ou les systèmes de maintien est dimensionné de manière à ce que la batterie soit serrée et maintenue de façon robuste dans le tube.

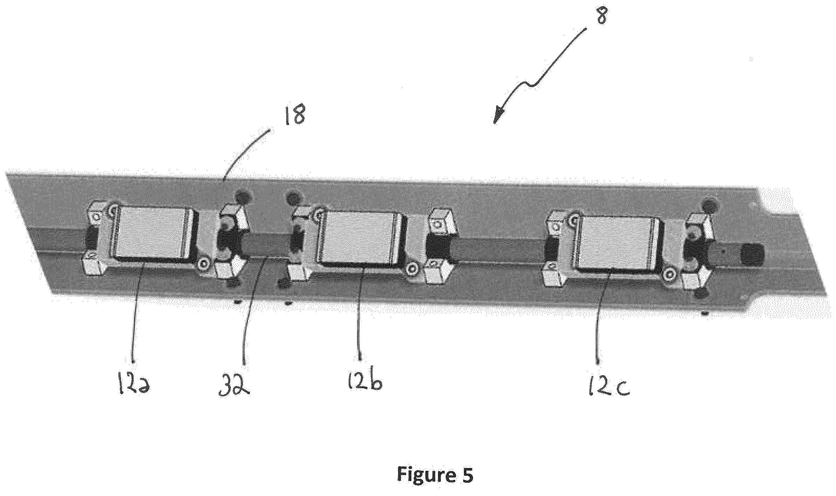

La figure 5 illustre un deuxième mode de réalisation d'un système mécanique de maintien selon l'invention dans lequel le système de maintien comporte une pluralité d'amortisseurs 12a, 12b, 12c, chaque amortisseur étant associé à une came située sous cet amortisseur. Les cames sont actionnées par un arbre commun 32 positionné selon l'axe longitudinal Z de la batterie. De plus, le système de maintien comprend un support 18 destiné à être fixé sur la paroi externe de la batterie cylindrique. Le système de maintien comporte en outre un dispositif d'actionnement supporté par le support 18 et agencé pour provoquer la rotation de chaque came par l'intermédiaire de l'arbre commun. Le dispositif d'actionnement peut être actionné manuellement au moment de la mise en place de la batterie ou de son retrait du tube.

Les systèmes mécaniques de maintien peuvent être actionnés simultanément ou séquentiellement. De préférence dans le cas de quatre systèmes de maintien comme illustrés sur la figure 1, les systèmes seront actionnés deux par deux et de préférence ceux du bas avant ceux fixés sur le haut de la batterie.

Le système est agencé de manière à ce que la rotation de chaque came (14) provoque le déplacement du suiveur de came (16) associé à chaque came et que le déplacement de chaque suiveur de came déplace un amortisseur (12) d'une position rétractée dans laquelle ledit amortisseur est à distance de la paroi interne (28) du tube (6), comme illustré en figure 3, à une position déployée dans laquelle ledit amortisseur est en contact avec une paroi interne du tube, comme illustré en figure 4.

En outre, le déplacement des suiveurs de came le long des chemins de came sont synchrones de manière à ce que tous les amortisseurs soient dans une position déployée au même instant.

Les modes de réalisation suivants sont à la fois compatibles avec le premier et le deuxième mode de réalisation.

Chaque chemin de came le long duquel un suiveur de came est agencé pour se déplacer, comporte un méplat (24). Chaque came peut être immobilisée par le méplat lorsque la came est en position déployée. Grâce à ce méplat, le système de maintien est binaire, c'est-à-dire que l'amortisseur ne peut être qu'en position rétractée ou en position déployée. Le méplat permet d'indiquer à un opérateur lors du serrage que la position de serrage est atteinte. Le système selon l'invention peut être manoeuvré en "aveugle", c'est-à-dire sans avoir de visibilité sur la position de la came. Il permet également de réduire la pression de matage entre la came et le suiveur de came.
- Chaque amortisseur (12) peut comprendre un patin élastique (20) prévu pour être agencé en regard de la paroi interne (28) du tube (6). Le suiveur de came forme support pour le patin élastique permettant ainsi de l'orienter et de le positionner par rapport à la paroi interne du tube. Ainsi, en position déployée, le patin élastique est comprimé entre la batterie et le tube de sorte à transmettre un effort de serrage à la batterie.

De préférence, le patin élastique (20) est dimensionné de manière à ce que sa raideur soit non linéaire, c'est-à-dire qu'elle soit faible lorsque la compression du patin élastique entre le suiveur de came et la paroi interne du tube est minime et élevée lorsque la compression augmente.

Ceci permet d'obtenir un système mécanique de maintien ayant une grande tolérance vis-à-vis des écarts dimensionnels de la batterie cylindrique et/ou du tube et facilite l'introduction de la batterie dans le tube. En outre, cette faible raideur permet de limiter également le couple à appliquer à la came pour venir serrer le système.

De plus, un tel système mécanique de maintien permet de limiter les déplacements de la batterie dans le tube lors d'éventuelles sollicitations de la batterie.

De façon privilégiée, chaque patin élastique est en matériau comportant un élastomère et de l'aluminium.

Un tel système permet d'éviter de réaliser un ensemble batterie-système de maintien trop rigide et contribue ainsi à alléger la masse du système de fixation par rapport aux systèmes mécaniques de maintien conventionnels.

Ainsi les dimensions et la raideur du patin élastique sont choisies afin d'obtenir un effort de serrage suffisamment important pour limiter les déplacements lors des sollicitations mécaniques et suffisamment faible pour ne pas comprimer la batterie excessivement. Par exemple, les dimensions et la raideur des patins élastiques d'un système de maintien selon l'invention peuvent être choisies afin d'obtenir un débattement d'environ 2,5 mm entre les dimensions de l'ensemble batterie/système de maintien par rapport aux dimensions internes du tube pour une batterie de 400 kg avec comme objectif de ne pas avoir de contact entre la batterie et le tube lors de sollicitations mécaniques.
- Le système mécanique de maintien peut comprendre une partie d'interfaçage (22) de l'amortisseur (12) avec la paroi interne (28) du tube (6). Cette partie d'interfaçage comprend une surface plane en regard de l'amortisseur permettant de répartir la compression sur l'ensemble de la surface du patin de façon homogène. En outre, cette partie d'interfaçage permet de protéger la surface du patin élastique en regard de la paroi interne du tube.
- Le système mécanique de maintien peut comprendre un rail (26) formant guide pour le ou chaque amortisseur, le rail étant prévu pour être fixé à la paroi interne du tube.

De préférence, le rail comporte au moins une surface plane (30) en regard du ou de chaque amortisseur.

De manière privilégiée, le rail présente une section en forme de U de manière à ce que le ou chaque amortisseur soit en liaison glissière avec le rail.

Ce rail permet de faciliter l'introduction ou le retrait de la batterie dans le tube en guidant les amortisseurs d'un même système mécanique de maintien.

Bien entendu, ce dispositif peut être également conçu pour maintenir tout type de masse cylindrique dans un tube de même axe longitudinal.

Un tel système mécanique de maintien est simple à manoeuvrer. En effet, lorsque le système est « désactivé », c'est-à-dire que le ou les amortisseurs sont en position rétractée comme illustré en figure 3, et donc à distance de la paroi interne du tube, l'introduction ou l'extraction de la batterie dans le tube est possible. Et lorsque le système est « activé », c'est-à-dire que le ou les amortisseurs sont en position déployée comme illustré en figure 4, et donc en contact avec la paroi interne du tube, la batterie est serrée et maintenue de façon robuste dans le tube.

En outre, le système de maintien selon l'invention est plus léger que les solutions déjà connues pour limiter les conséquences néfastes des sollicitations mécaniques, notamment vibratoires. Ainsi, cette limitation permet de réduire ou de supprimer les sur-amplifications du déplacement de certaines parties de la batterie dans le tube dues à ces déformations et donc de diminuer les risques de casse.

De plus, l'ensemble batterie/système de fixation est plus compact que les solutions connues, permettant ainsi d'augmenter le volume des batteries pouvant être insérées dans le tube et d'obtenir ainsi une augmentation de l'énergie disponible.

## Revendications

1. Système mécanique de maintien (8) pour maintenir une batterie de format cylindrique (4) dans un tube (6) de même axe longitudinal, le système étant prévu pour être fixé à une paroi externe (10) de la batterie et le système comprenant :
- un amortisseur (12) ;
- une came (14) coopérant avec un suiveur de came (16) ;
dans lequel :
- la rotation de la came provoque le déplacement du suiveur de came; et
- le déplacement du suiveur de came déplace l'amortisseur d'une position rétractée dans laquelle l'amortisseur est à distance de la paroi interne (28) du tube à une position déployée dans laquelle l'amortisseur est en contact avec la paroi interne du tube; **caractérisé en ce que**:
- le ou chaque chemin de came le long duquel le ou chaque suiveur de came est agencé pour se déplacer comporte un méplat (24).

2. Système mécanique de maintien selon la revendication 1 comprenant :
- un support (18) destiné à être fixé sur la paroi externe (10) de la batterie;
- au moins un deuxième amortisseur (12a, 12b, 12c), au moins une deuxième came (14a, 14b, 14c) coopérant avec un deuxième suiveur de came ; et
- un dispositif d'actionnement supporté par le support et agencé pour provoquer la rotation de chaque came;
dans lequel :
- la rotation de la deuxième came provoque le déplacement du deuxième suiveur de came ;
- le déplacement du deuxième suiveur de came déplace le deuxième amortisseur d'une position rétractée dans laquelle le deuxième amortisseur est à distance de la paroi interne du tube à une position déployée dans laquelle le deuxième amortisseur est en contact avec la paroi interne (28) du tube; et
- le déplacement des suiveurs de came sont synchrones.

3. Système mécanique de maintien selon la revendication 1 ou 2, dans lequel le ou chaque amortisseur (12) comprend un patin élastique (20) prévu pour être agencé en regard de la paroi interne (28) du tube (6).

4. Système mécanique de maintien selon la revendication 3, dans lequel le patin élastique a une raideur non linéaire.

5. Système mécanique de maintien selon la revendication 3 ou 4, dans lequel le ou chaque patin élastique est en matériau comportant un élastomère et de l'aluminium.

6. Système mécanique de maintien selon l'une quelconque des revendications 1 à 5, comprenant une partie d'interfaçage (22) de l'amortisseur avec la paroi interne (28) du tube.

7. Système mécanique de maintien selon l'une quelconque des revendications 1 à 6, comprenant un arbre (32) d'axe parallèle à l'axe longitudinal de la batterie, l'arbre formant un dispositif d'actionnement de la ou chaque came.

8. Système mécanique de maintien selon l'une quelconque des revendications 1 à 7 comprenant un rail (26) formant guide pour le ou chaque amortisseur (12), le rail étant prévu pour être fixé à la paroi interne (28) du tube (6).

9. Système mécanique de maintien selon la revendication 8, dans lequel le rail comporte au moins une surface plane (30) en regard du ou de chaque amortisseur.

10. Système mécanique de maintien selon la revendication 8 ou 9, dans lequel le rail présente une section en forme de U de manière à ce que le ou chaque amortisseur (12) soit en liaison glissière avec le rail (26).

11. Dispositif mécanique de maintien pour maintenir une batterie de format cylindrique dans un tube de même axe longitudinal, le dispositif comprenant au moins trois systèmes mécaniques de maintien selon l'une quelconque des revendications 1 à 10 répartis le long de la circonférence de la batterie.

12. Dispositif mécanique de maintien selon la revendication 11 conçu pour maintenir une batterie dans un compartiment d'un engin, l'engin étant destiné à être alimenté par la batterie, le compartiment étant constitué du tube.

13. Dispositif mécanique de maintien selon la revendication 11 conçu pour maintenir une batterie dans un compartiment d'un engin automoteur, ledit engin étant destiné à être alimenté par la batterie, le compartiment étant constitué du tube.

## Patentansprüche

1. Mechanisches Halterungssystem (8) zum Halten einer Batterie von zylindrischem Format (4) in einer Röhre (6) mit derselben Längsachse, wobei das System dazu vorgesehen ist, an einer Außenwand (10) der Batterie befestigt zu sein, und wobei das System Folgendes umfasst:
- einen Dämpfer (12);
- eine Nocke (14), die mit einem Nockenfolger (16) zusammenwirkt;
wobei:
- die Drehung der Nocke zur Verschiebung des Nockenfolgers führt; und
- die Verschiebung des Nockenfolgers den Dämpfer von einer eingezogenen Position, in welcher der Dämpfer in einem Abstand zur Innenwand (28) der Röhre angeordnet ist, in eine ausgefahrene Position verschiebt, in welcher der Dämpfer mit der Innenwand der Röhre in Kontakt ist;
**dadurch gekennzeichnet, dass**:
- der oder jeder Nockenweg, entlang dessen der oder jeder Nockenfolger angeordnet ist, um sich zu verschieben, eine Abflachung (24) aufweist.

2. Mechanisches Halterungssystem nach Anspruch 1, umfassend:
- einen Träger (18), der dazu bestimmt ist, an der Außenwand (10) der Batterie befestigt zu werden;
- mindestens einen zweiten Dämpfer (12a, 12b, 12c), mindestens eine zweite Nocke (14a, 14b, 14c), die mit einem zweiten Nockenfolger zusammenwirkt, und
- eine Betätigungsvorrichtung, die von dem Träger getragen wird und so angeordnet ist, dass sie die Drehung jeder Nocke verursacht;
wobei:
- die Drehung der zweiten Nocke die Verschiebung des zweiten Nockenfolgers verursacht;
- die Verschiebung des zweiten Nockenfolgers den zweiten Dämpfer von einer eingezogenen Position, in welcher der zweite Dämpfer in einem Abstand zur Innenwand der Röhre angeordnet ist, in eine ausgefahrene Position verschiebt, in welcher der zweite Dämpfer mit der Innenwand (28) der Röhre in Kontakt ist; und
- die Verschiebungen der Nockenfolger synchron sind.

3. Mechanisches Halterungssystem nach Anspruch 1 oder 2, wobei der oder jeder Dämpfer (12) einen elastischen Gleitschuh (20) umfasst, der dazu vorgesehen ist, gegenüber der Innenwand (28) der Röhre (6) angeordnet zu sein.

4. Mechanisches Halterungssystem nach Anspruch 3, wobei der elastische Gleitschuh eine nichtlineare Steifigkeit hat.

5. Mechanisches Halterungssystem nach Anspruch 3 oder 4, wobei der oder jeder elastische Gleitschuh aus einem Material ist, das ein Elastomer und Aluminium enthält.

6. Mechanisches Halterungssystem nach einem der Ansprüche 1 bis 5, das einen Schnittstellenbereich (22) des Dämpfers mit der Innenwand (28) der Röhre umfasst.

7. Mechanisches Halterungssystem nach einem der Ansprüche 1 bis 6, das eine Welle (32) mit einer Achse parallel zur Längsachse der Batterie umfasst, wobei die Welle eine Betätigungsvorrichtung der oder jeder Nocke bildet.

8. Mechanisches Halterungssystem nach einem der Ansprüche 1 bis 7, das eine Schiene umfasst (26), die eine Führung für den oder jeden Dämpfer (12) bildet, wobei die Schiene dazu vorgesehen ist, an der Innenwand (28) der Röhre (6) befestigt zu sein.

9. Mechanisches Halterungssystem nach Anspruch 8, wobei die Schiene mindestens eine ebene Fläche (30) gegenüber dem oder jedem Dämpfer umfasst.

10. Mechanisches Halterungssystem nach Anspruch 8 oder 9, wobei die Schiene einen U-förmigen Querschnitt aufweist, so dass der oder jeder Dämpfer (12) mit der Schiene (26) in Gleitverbindung steht.

11. Mechanische Halterungsvorrichtung, um eine Batterie von zylindrischem Format in einer Röhre mit derselben Längsachse zu halten, wobei die Vorrichtung mindestens drei mechanische Halterungssysteme nach einem der Ansprüche 1 bis 10 umfasst, die entlang des Umfangs der Batterie verteilt sind.

12. Mechanische Halterungsvorrichtung nach Anspruch 11, die dazu ausgelegt ist, eine Batterie in einer Kammer einer Maschine zu halten, wobei die Maschine dazu bestimmt ist, von der Batterie gespeist zu werden, wobei die Kammer von der Röhre gebildet ist.

13. Mechanische Halterungsvorrichtung nach Anspruch 11, die dazu ausgelegt ist, eine Batterie in einer Kammer einer selbstfahrenden Maschine zu halten, wobei die Maschine dazu bestimmt ist, von der Batterie versorgt zu werden, und wobei die Kammer von der Röhre gebildet ist.

## Claims

1. Mechanical retention system (8) for retaining a cylindrical-shaped battery (4) in a tube (6) having the same longitudinal axis, the system being adapted to be secured to an external wall (10) of the battery and the system comprising:
- a damper (12);
- a cam (14) cooperating with a cam follower (16);
wherein :
- rotation of the cam causes the cam follower to move; and
- the movement of the cam follower moves the damper from a retracted position wherein the damper is spaced from the inner wall (28) of the tube to a deployed position wherein the damper is in contact with the inner wall of the tube;
**characterised in that**:
- the or each cam track along which the or each cam follower is arranged to move includes a flat portion (24).

2. Mechanical retention system according to claim 1, comprising:
- a support (18) intended to be secured on the external wall (10) of the battery;
- at least one second damper (12a, 12b, 12c), at least one second cam (14a, 14b, 14c) cooperating with a second cam follower; and
- an actuating device supported by the support and arranged to cause the rotation of each cam;
wherein :
- the rotation of the second cam causes the second cam follower to move;
- the movement of the second cam follower moves the second damper from a retracted position in which the second damper is at a distance from the inner wall of the tube to a deployed position in which the second damper is in contact with the inner wall (28) of the tube; and
- the cam followers move synchronously.

3. Mechanical retention system according to claim 1, wherein the or each damper (12) includes an elastic pad (20) designed to be arranged facing the inner wall (28) of the tube (6).

4. Mechanical retention system according to claim 3, wherein the resilient pad has non-linear stiffness.

5. Mechanical retention system according to claim 3 or 4, wherein the or each elastic pad is made of material comprising an elastomer and aluminum.

6. Mechanical retention system according to any one of claims 1 to 5, comprising an portion (22) for interfacing the damper with the inner wall (28) of the tube.

7. Mechanical retention system according to any one of claims 1 to 6, comprising a shaft (32) with an axis parallel to the longitudinal axis of the battery, the shaft forming a device for actuating the or each cam.

8. Mechanical retention system according to any one of claims 1 to 7, comprising a rail (26) forming a guide for the or each damper (12), the rail being intended to be secured to the inner wall (28) of the tube (6).

9. Mechanical retention system according to claim 8, wherein the rail comprises at least one flat surface (30) facing the or each damper.

10. The mechanical retention system according to claim 8 or 9, wherein the rail has a U-shaped cross-section so that the or each damper (12) is in a slide connection with the rail (26).

11. A mechanical retention device for retaining a cylindrical-shaped battery in a tube having the same longitudinal axis, the device comprising at least three mechanical retention systems according to any one of claims 1 to 10 distributed along the circumference of the battery.

12. Mechanical retention device according to claim 11, adapted to hold a battery in a compartment of a piece of equipment, the piece of equipment being intended to be powered by the battery, the compartment being constituted by the tube.

13. Mechanical retention device according to claim 11, adapted to hold a battery in a compartment of a self-propelled piece of equipment, said piece of equipment being intended to be powered by the battery, the compartment being constituted by the tube.
